# EUROPÄISCHE PATENTSCHRIFT

(11) **EP 2 153 508 B1**
(45) Veröffentlichungstag und Bekanntmachung des Hinweises auf die Patenterteilung: **23.03.2016**
(21) Anmeldenummer: 08707316.9
(22) Anmeldetag: 26.01.2008
(51) Int. Cl.: H02K 5/22, F04D 13/06

(54) **ELEKTROMOTOR**
ELECTRIC MOTOR
MOTEUR ÉLECTRIQUE

(30) Priorität: 08.05.2007 DE 102007022070
(43) Veröffentlichungstag der Anmeldung: 17.02.2010
(73) Patentinhaber: WILO SE, 44263 Dortmund (DE)
(72) Erfinder: BORDIER, Stephane, 18410 Argent-sur-Sauldre (FR); GERMAIN, Eric, 18410 Argent-sur-Sauldre (FR); MARKO, Armin, 45500 Gien (FR); BOUILLY, Hervé, 53940 Le Genest-Saint-Isle (FR); LEZÉ, Adrien, 53940 St. Berthevin (FR)
(74) Vertreter: Cohausz Hannig Borkowski Wißgott
(86) Internationale Anmeldenummer: PCT/EP2008/000610
(87) Internationale Veröffentlichungsnummer: WO 2008/135103

(56) Entgegenhaltungen:
- EP-A- 1 315 271
- DE-A1- 3 342 967
- DE-U1- 8 104 105
- DE-U1- 9 315 914

## Beschreibung

Die Erfindung betrifft einen Elektromotor, insbesondere für eine Kreiselpumpe, umfassend einen Stator, darin laufenden Rotor und ein statorendseitig am Stator befestigtes Steckerelement mit im Wesentlichen radial nach außen abstehenden elektrischen Kontakten zur Aufnahme wenigstens eines in radialer Richtung aufsteckbaren Steckers, wobei der Elektromotor ein erstes Gehäuseteil umfasst, welches im Wesentlichen als zylinderförmiger Topf ausgebildet ist und den Stator umgibt, und ein zweites Gehäuseteil umfasst, welches am ersten Gehäuseteil befestigbar ist, wobei das erste Gehäuseteil eine in radialer Richtung von der zylindrischen Mantelfläche vorspringende und sich in axialer Richtung, über im Wesentlichen die gesamte axiale Länge erstreckende Ausbuchtung aufweist, in der eine in radialer Richtung offene Ausnehmung vorgesehen ist, durch die das Steckerelement nach der Montage des ersten Gehäuseteils kontaktierbar ist.

Elektromotoren sind im Stand der Technik allgemein bekannt, wobei es vorgesehen ist, die Statorwicklungen zur Kontaktierung in ein Steckerelement zu führen, welches statorendseitig angeordnet sein kann und auf welches ein dazu passender Stecker aufsteckbar ist, um die einzelnen Statorwicklungen an einen entsprechenden Frequenzumrichter oder sonstige Steuergeräte anzuschließen, um die Statorwicklungen zu bestromen.

Eine solche Art der Kontaktierung ist beispielsweise in den sogenannten weißen Produkten vorgesehen, wie beispielsweise bei Waschmaschinen, wobei bei den entsprechenden Elektromotoren auf eine weitere Einhäusung verzichtet wird, da derartige Elektromotoren von außen und somit für unberechtigte Dritte nicht zugänglich sind. Insofern bedarf es beim Anwendungsgebiet der weißen Waren keiner weiteren schützenden Einhäusung.

Bei Kreiselpumpen, wie sie beispielsweise in Heizkreisläufen zum Einsatz kommen, ist es bekannt, diese komplett einzuhäusen, da solche Kreiselpumpen üblicherweise zugänglich sind, so dass für solche Pumpen und die Motoren die Anforderung besteht, diese Anordnung vollständig in ein Gehäuse einzubauen, um die Gefahr eines Stromschlags für Personen sowie auch das Eindringen von Wasser in die Elektronik zu vermeiden.

Es ist weiterhin am Markt die Tendenz bekannt, Kompaktheizungsanlagen bereitzustellen, die in einem kompakten Heizanlagengehäuse auch Pumpen, insbesondere elektromotorisch angetriebene Kreiselpumpen verwenden, so dass hier mitunter geringere Anforderungen an das Gehäuse einer solchen Pumpe gestellt werden können, was die elektrische Sicherheit und die Wasserdichtigkeit angeht.

Ein Elektromotor der eingangs genannten gattungsgemäßen Art ist z.B. aus der Veröffentlichung DE 81 04 105 U1 bekannt.

Es ist daher die Aufgabe der Erfindung, einen Elektromotor bereitzustellen, der Mindestanforderungen an die elektrische Sicherheit sowie Wasserdichtigkeit bietet und darüber hinaus kostengünstig und konstruktiv einfach zu fertigen ist. Hierbei soll gegebenenfalls die Möglichkeit bestehen, auf Standardkomponenten zurückgreifen zu können, die am Markt problemlos erhältlich sind.

Darüber hinaus ist es weiterhin Aufgabe der Erfindung, einen Elektromotor bzw. daraus gebildete Kreiselpumpe bereitzustellen, die kleinbauend und somit platzsparend ausgeführt ist, insbesondere um in den vorgenannten Kompaktheizungsanlagen eingesetzt zu werden. Weiterhin ist es Aufgabe, einen derartigen Motor bzw. Kreiselpumpe derart bereitzustellen, dass diese auf einfache Art und Weise durch das Servicepersonal, gegebenenfalls auch durch den Endanwender gewartet werden können.

Die Aufgabe wird erfindungsgemäß dadurch gelöst, dass im zweiten Gehäuseteil wenigstens ein Stecker durch eine Rastverbindung lagestabil fixiert ist, wobei beim rastenden Befestigen des zweiten Gehäuseteils am ersten Gehäuseteil der wenigstens eine Stecker das Steckerelement lösbar kontaktiert und das zweite Gehäuseteil die radial offene Ausnehmung nach der elektrischen Kontaktierung überdeckt, wobei für das rastende Befestigen beidseitig der Ausbuchtung sich zumindest über einen Teilbereich des ersten Gehäuseteils in axialer Richtung erstreckende Rastnasen vorgesehen sind und/oder an der Ausbuchtung an der Stirnseite des Motors wenigstens eine Rastnase oder eine Rastausnehmung vorgesehen ist und/oder an einem vorspringenden Gehäusewandbereich des zweiten Gehäuseteils, der einen Wandbereich des ersten Gehäuseteils bei der Montage überdeckt oder an der Topfbodenseite des zylindrischen ersten Gehäuseteils Noppen oder wenigstens ein Vorsprung angeordnet sind, die in wenigstens eine korrespondierende Ausnehmung bei der Montage eingreifen und/oder an einem der Gehäuseteile ein Schieberelement und am anderen eine Aufnahme für das Schieberelement vorgesehen ist, wobei das Schieberelement in einem Schienenelement vor- und zurückgleiten kann, in welchem ein Vorsprung als Rastelement vorgesehen ist, auf welches das Schieberelement beim Befestigen mit einer darin vorgesehenen Ausnehmung aufschiebbar und verrastbar ist.

Ein derartig aufgebauter erfindungsgemäßer Elektromotor erweist sich als besonders servicefreundlich und darüber hinaus weiterhin sicher hinsichtlich der elektrischen Sicherheitsanforderung und der Wasserdichtigkeit, da zum einen durch die zweiteilige Gehäusekonstruktion eine genügende Abschirmung gegenüber versehentlichem Kontakt durch Personen sowie auch gegenüber Wassereintritt gegeben ist und zum anderen die elektrischen Verbindungen zu den Statorwicklungen auf einfache Art und Weise durch das Servicepersonal oder den Endanwender hergestellt sowie auch wieder gelöst werden können.

Hierbei wird durch die sich in axialer Richtung erstreckende Ausbuchtung, die radial von der zylindrischen Mantelfläche des ersten Gehäuseteils z.B. mit im Wesentlichen rechteckigem Querschnitt vorspringt, erreicht, dass das ansonsten im Wesentlichen zylindrisch ausgebildete erste Gehäuseteil in axialer Richtung über den Stator auf die Motoranordnung aufgeschoben werden kann, wobei ein am Stator befestigtes und radial vorstehendes Steckerelement in der Ausbuchtung zu liegen kommt und somit genügend freier Platz in dem ersten Gehäuseteil vorhanden ist, um ein axiales Aufschieben zu ermöglichen.

Hierfür kann es in erfindungsgemäß bevorzugter Ausführung vorgesehen sein, dass die radial vorstehende Ausbuchtung sich im Wesentlichen über die gesamte axiale Länge des ersten Gehäuseteils erstreckt, so dass im Inneren des Gehäuses eine genügend große, sich in axialer Richtung erstreckende Aussparung vorhanden ist, durch die beim Aufschieben das Steckerelement relativ zum ersten Gehäuseteil hindurchgeführt werden kann.

Hierbei ist es im Wesentlichen ausreichend, dass der innere, durch die Ausbuchtung bereitgestellte Platz sich über die gesamte Länge des zylindrischen Gehäuseteils erstreckt, wohingegen von der Außenseite her die radial vorstehende und sich axial erstreckende Ausbuchtung in einen Flanschbereich übergehen kann zur Befestigung des zylinderförmigen ersten Gehäuseteils an einem weiteren, hier nicht weiter beachteten Gehäuseteil, wie beispielsweise dem Pumpengehäuseteil.

Durch die in der Ausbuchtung vorgesehene, in radialer Richtung offene Ausnehmung besteht sodann die Möglichkeit, eine Kontaktierung des am Stator radial vorstehenden Steckerelementes vorzunehmen, so dass somit die Kontaktierung durch diese Ausnehmung hindurch nach der Montage des zylinderförmigen ersten Gehäuseteils erfolgen kann.

Dies vereinfacht Wartungsmaßnahmen, da beispielsweise auch nach einer Montage eine Kontaktierung wieder gelöst werden kann, wobei darüber hinaus eine Wasserdichtigkeit, zum einen durch das zylindrische erste Gehäuseteil sowie dann auch durch ein zweites Gehäuseteil gegeben wird, welches am ersten Gehäuseteil rastend befestigbar ist und die vorgenannte Ausnehmung nach einer elektrischen Kontaktierung überdeckt.

Als eine besonders bevorzugte Weiterbildung wird es angesehen, wenn das erste vorgenannte Gehäuseteil in axialer Richtung zweigeteilt ist. Dies bietet die Möglichkeit, für die beiden verschiedenen Gehäuseteile unterschiedliche Materialien zu wählen und somit an die besonderen Anforderungen, insbesondere einer Kreiselpumpe für Kompaktheizungsanlagen anzupassen.

So können durch diese besondere Zweiteilung Anforderungen an die Wärmeleitung sowie auch an das Gewicht und die einfache Herstellbarkeit erfüllt werden. Beispielsweise kann es vorgesehen sein, dass das erste topfförmige Gehäuseteil einen rohrförmigen Teil umfasst, der beispielsweise einen Befestigungsflansch aufweist und hier insbesondere auf der dem vorgenannten statorseitigen Steckerelement abgewandten Seite des ersten Gehäuseteils angeordnet ist, wobei dieses rohrförmige Teil metallisch (z.B. Alu) ausgebildet sein kann.

Dies hat den besonderen Vorteil, dass durch die metallische Ausbildung dieses rohrförmigen Teils für eine gute Wärmeabfuhr im Betrieb des Motors gesorgt werden kann.

Das erste Gehäuseteil kann weiterhin ein zweites, dem Steckerelement zugewandtes, insbesondere topfförmiges Teil aufweisen, insbesondere ein solches topfförmiges Teil, welches die vorgenannte, in radialer Richtung offene Ausnehmung aufweist, welches nicht metallisch ausgebildet sein kann, beispielsweise aus einem Kunststoff oder einem Kunststoffkomposit. So kann dieser Teil des ersten Gehäuseteils besonders leichtbauend hergestellt sein.

Das rohrförmige Teil und das topfförmige Teil können untereinander befestigt sein und so das im Sinne der Erfindung erste Gehäuseteil ausbilden. Die Befestigung untereinander kann z.B. durch eine Schnappverbindung oder auch jegliche andere Verbindung wie eine Bajonett- oder eine Schraubverbindung erfolgen. Beispielsweise können an dem topfförmigen Teil am Randbereich der Zylinderwandung Rastnasen vorgesehen sein, die in entsprechende Hinterschnitte oder Ausnehmungen am rohrförmigen Teil eingreifen und somit diese beiden Teile gegebenenfalls untrennbar miteinander verbinden.

Eine derartige zweiteilige Ausführung des ersten Gehäuseteils hat darüber hinaus auch den Vorteil, dass insbesondere der nicht metallische Teil beispielsweise auch durch Kunststoffspritzgussverfahren hergestellt sein kann, wobei es ergänzend vorgesehen sein kann, dieses nicht metallischen Teil mit Aufschriften, beispielsweise durch eine Laserbeschriftung, zu versehen.

In einer Weiterbildung kann es auch vorgesehen sein, dass das erste Gehäuseteil, unabhängig davon ob es ein- oder zwei- oder auch mehrteilig ausgeführt ist, Gehäuse-Wanddurchbrüche, insbesondere im zylindrischen Mantelbereich, z.B. runde Bohrungen oder auch eckige Ausnehmung oder Schlitze aufweist. Dies kann zu einer verbesserten Kühlung des Motors beitragen. Bei einer mehrteiligen (2 oder mehr) Ausbildung des ersten Gehäuseteils können solche Wanddurchbrüche nur in einem oder auch in mehreren der Teile vorgesehen sein.

Für die Befestigung des zweiten Gehäuseteils am ersten Gehäuseteil ist es in einer möglichen Alternative erfindungsgemäß vorgesehen, dass beidseitig der Ausbuchtung, die bevorzugt in axialer Richtung einen im Wesentlichen rechteckigen Querschnitt aufweisen kann, außen an dem ersten Gehäuseteil sich zumindest über einen Teilbereich, insbesondere zumindest über einen Teilbereich des rohrförmigen Teils des ersten Gehäuseteils in axialer Richtung erstreckende Rastnasen vorgesehen sind. An diesen Rastnasen können entsprechend ausgeführte Rasthaken, die am zweiten Gehäuseteil vorgesehen sind, einhaken. Hierbei wird durch die axiale Erstreckung dieser Rastnasen sichergestellt, dass selbst bei einer nicht genauen Positionierung von Rasthaken und Rastnasen immer ein ausreichender Eingriff dieser Elemente zwecks Befestigung stattfindet.

Hierbei kann es in einer Ausführung vorgesehen sein, dass in einem Bereich einer Gehäusewand des zweiten Gehäuseteils in der unmittelbaren Nähe zu einem der Rasthaken eine Kabeldurchführung, z.B. als ein Loch in der Gehäusewand vorgesehen ist, z.B. für ein Stromversorgungskabel. Auch kann zwischen einer Gehäusewand und einem der Rasthaken eine Lücke vorgesehen sein zur Kabeldurchführung.

Weiterhin kann es auch vorgesehen sein, stirnseitig des Motorgehäuses und somit von außen am Boden des vorgenannten topfförmigen ersten Gehäuseteils wenigstens eine weitere Rastnase vorzusehen, die mit einem Rasthaken oder einer Lasche mit einer Ausnehmung rastend in Eingriff gelangen kann, die am zweiten Gehäuseteil vorgesehen ist. Somit ergibt sich eine rastende Befestigung an wenigstens drei Punkten, so dass das zweite Gehäuseteil am ersten sicher befestigt ist.

In einer anderen Alternative oder auch ergänzend zur vorherigen Ausführung sieht es die Erfindung vor, an einem vorspringenden Gehäusewandbereich des zweiten Gehäuseteils, der einen Wandbereich des ersten Gehäuseteils bei der Montage überdeckt, Noppen oder sonstige Vorsprünge (wenigstens einer) anzuordnen , die in korrespondierende Ausnehmungen (wenigstens eine) bei der Montage eingreifen. Ein solcher verrastender Mechanismus kann, wie auch bei der vorherigen Ausführung erwähnt, ebenfalls an der Topfbodenseite des zylindrischen ersten Gehäuseteils angeordnet sein.

In einer wieder anderen alternativen, aber auch ergänzend möglichen Ausführung sieht es die Erfindung vor, dass zur Befestigung des zweiten Gehäuseteils am ersten Gehäuseteil an einem der Gehäuseteile ein Mechanismus mit einem Schieber und am anderen eine Aufnahme für den Schieber bzw. dessen Spitze vorgesehen ist. Wird der Schieber betätigt, so kann es vorgesehen sein, dass die Gehäuseteile derart verbunden werden, dass sie nicht mehr voneinander gelöst werden können. Hier kann es vorgesehen sein, dass der Schieber zur Befestigung per Hand oder durch ein Werkzeug betätigbar ist, zu Lösung der Verbindung jedoch nur durch ein Werkzeug betätigbar ist.

Dass eine Betätigung zur Lösung nur durch ein Werkzeug möglich ist, kann dadurch realisiert werden, dass der Schieber in seiner befestigenden Position verrastet und diese Rastverbindung nur mit einer hohen Kraft gelöst werden kann, die nicht manuell, aber durch ein Werkzeug erzeugt werden kann.

Unter einem solchen Werkzeug kann auch ein solches verstanden werden, welches direkt am zweiten Gehäuseteil angebracht ist und zur Betätigung des Schieberelements dient. Auch kann es sich beispielsweise um eine Schraube handeln, die bei Betätigung (Drehen) das Schieberelement bewegt und genügend Kraft zur Bewegung bereitstellt. Hierfür kann ein Eingriff zwischen Schraube und Schieberelement bestehen, insbesondere welcher erst mit Bewegung des Schieberelements in die verriegelte Position entsteht. Eine solche Schraube kann z.B. von vorne (bezogen auf das zweite Gehäuseteil) zugänglich sein.

Der Schiebermechanismus ist realisiert durch ein Schienenelement, in welchem ein Schieberelement vor- und zurück gleiten kann. In dem Schienenelement ist ein Vorsprung als Rastelement vorgesehen, auf welches das Schieberelement beim Befestigen mit einer darin vorgesehenen Ausnehmung aufgeschoben wird und so verrastet. Am Schieberelement kann ein aus der Schienenführung vorspringendes Griffelement vorgesehen sein, welches manuell oder mit einer Werkzeug ergriffen werden kann.

Hier kann es in einer möglichen Ausführung vorgesehen sein, dass das Schienenelement mit Schieberelement am zweiten Gehäuseteil vorgesehen ist und eine Aufnahme für die Spitze des Schiebers am ersten Gehäuseteil. Dieser Mechanismus kann bevorzugt an einem Seitenwandbereich des zweiten Gehäuseteils realisiert sein.

In einer weiteren bevorzugten Ausbildung kann es vorgesehen sein, dass am zweiten Gehäuseteil eine gebogene Lasche vorgesehen ist, die dazu dient, einen Kondensator insbesondere formschlüssig aufzunehmen. Hierfür kann die Lasche beispielsweise wenigstens teilkreisförmig gebogen sein, wobei der Biegeradius dem Radius eines zylinderförmigen Kondensators entsprechen kann oder etwas geringer ist. So kann durch eine solche Lasche ein zylindrischer Kondensator klemmend im Formschluss festgehalten werden.

Eine solche Ausführung kann insbesondere dann vorgesehen sein, wenn ein derartiger erfindungsgemäßer Elektromotor bereits schon durch seinen Einbauort genügend gegen unbeabsichtigtes Berühren durch Personen geschützt ist. Es besteht dann bereits durch die Einbaulage keine Gefahr, dass Personen versehentlich stromführende Teil, beispielsweise die elektrischen Anschlüsse des Kondensators, berühren.

Wird eine höhere Schutzklasse benötigt, so kann es in einer anderen Ausführung auch vorgesehen sein, dass am zweiten Gehäuseteil ein Gehäuseelement zur Aufnahme eines Kondensators angeordnet ist, welches den Kondensator vollständig umgibt und bevorzugt zwei Gehäuseschalen umfasst. So kann demnach ein Kondensator nach dem Einlegen in die eine Gehäuseschale von der anderen Gehäuseschale überdeckt werden, so dass der Kondensator durch beide Gehäuseschalen vollständig umschlossen ist. Dies kann besonders einfach dann erfolgen, wenn die beiden Gehäuseschalen gelenkig miteinander verbunden sind, beispielsweise durch ein Festkörpergelenk, welches durch wenigstens einen Kunststoffsteg ausgebildet sein kann, der im Knickbereich beispielsweise verdünnt ausgeführt ist.

Für die elektrische Kontaktierung kann es hier vorgesehen sein, dass der wenigstens eine Stecker, der zur Verbindung mit dem Steckerelement verwendet wird, im zweiten Gehäuseteil befestigbar ist bzw. befestigt ist. Dies kann beispielsweise ebenfalls durch eine Rastverbindung oder auch eine sonstige klemmende Verbindung erfolgen. So wird der Stecker in dem Gehäuseteil lagestabil fixiert und durch das Aufsetzen des zweiten Gehäuseteils an dem ersten Gehäuseteil automatisch in Kontakt gebracht mit dem Steckerelement am Stator.

Bereits durch das Einhäusen des Steckers in dem zweiten Gehäuseteil kann gegebenenfalls eine ausreichende IP-Schutzklasse sowohl gegen Berührung als auch gegen eindringende Feuchtigkeit erreicht werden.

Ist diese Realisierung nicht ausreichend, so kann es ergänzend vorgesehen sein, dass der wenigstens eine Stecker in einer Kappe befestigbar/befestigt ist, die in das Innere des zweiten Gehäuseteils einsetzbar/eingesetzt ist. So kann durch die Kappe, in welcher der Stecker einsetzbar ist und gegebenenfalls durch die Art der Kabelführung zwischen Stecker und Kappe eine weitere Sicherheit, zum einen gegen Berührung und zum anderen gegen eintretende Nässe erreicht werden.

Beispielsweise kann die Kappe den wenigstens einen Stecker derart aufnehmen, dass nach dem Einsetzen der Kappe mit Stecker in das zweite Gehäuseteil der Stecker zwischen Kappe und Gehäuseteil angeordnet ist und somit ein weiterer Schutz gegen Berührung und eindringende Nässe durch die Kappe gegeben ist.

Hierfür kann es ergänzend vorgesehen sein, dass die Anschlusskabel des wenigstens einen Steckers durch einen Schlitz geführt sind, der durch das Zusammenfügen von Kappe und zweitem Gehäuseteil entsteht. So wird der Stecker durch die Kappe und das zweite Gehäuseteil derart eingekapselt, dass der Stecker bis auf eine Öffnung für die Hindurchführung der elektrischen Kontakte beim Aufstecken auf die Steckerelemente des Stators vollständig eingekapselt ist, wobei zur Erzielung einer weiteren Wasserdichtigkeit das Anschlusskabel, welches z.B. als nebeneinanderliegende einzelne Litze oder auch als Flachbandkabel ausgeführt sein kann, durch den genannten, hierfür vorgesehenen Schlitz geführt wird. So bietet ein solcher Schlitz nur wenig Querschnitt für eintretendes Wasser, wobei dieser verbleibende Querschnitt des Schlitzes im Wesentlichen durch die Kabel selbst ausgefüllt ist.

Hierbei kann es vorgesehen sein, dass der Schlitz gebildet ist durch einen von der Innenseite des zweiten Gehäuseteils sich zur Kappe und einen von der Kappe sich zur Innenseite des zweiten Gehäuseteils erstreckenden, insbesondere senkrecht zur axialen Richtung des Motors bzw. senkrecht zu den geführten Anschlusskabeln des Steckers ausgerichteten jeweiligen Wandbereich, wobei die jeweiligen Stirnseiten der beiden Wandbereiche zumindest bereichsweise einander mit Abstand gegenüberliegen. So bildet der Abstand zwischen diesen beiden Stirnseiten den eingangs genannten Schlitz, durch den die Leitungen für die elektrische Kontaktierung zum Stecker geführt werden können.

Die Leitungen zum Stecker werden somit von den beiden Stirnseiten umschlossen, was zum einen auch zu einer Zugentlastung beitragen kann und den Eintrittsquerschnitt für eventuelles Wasser reduziert.

Hierbei kann es auch vorgesehen sein, dass die Kabel, die zum Stecker führen, gebogen über einen der beiden Wandbereiche verlaufen, d.h. zunächst einseitig eines der beiden Wandbereiche nach oben geführt sind, dann durch den Schlitz zwischen den beiden Wandbereichen hindurch und auf der anderen Seite wieder heruntergeführt sind. So müsste eintretendes Wasser an den Kabeln der Schwerkraft entgegen aufsteigen, um in den Stecker zu gelangen, was somit einen weiteren Schutz vor Feuchtigkeit bietet.

Für die elektrische Kontaktierung wird es weiterhin als vorteilhaft empfunden, wenn innerhalb des wenigstens einen Steckers oder Steckerelementes am Stator Brücken vorgesehen sein können. So können hier gezielt Kurzschlüsse sowie auch die Kontaktierung zu dem vorgenannten Kondensator vorgesehen sein. Ebenso besteht die Möglichkeit, in der Kappe bzw. in dem zweiten Gehäuseteil wenigstens zwei Stecker zu befestigen, wobei einer der Stecker zur Kontaktierung des Kondensators dient und ein anderer Stecker zur Kontaktierung der Wicklungen mit einem Steuergerät, beispielsweise einem Frequenzumrichter.

Als besonders vorteilhaft und bevorzugt wird es hier angesehen, wenn der wenigstens eine Stecker und das Steckerelement als Standardelemente ausgebildet sind, die üblicherweise am Markt erhältlich sind. Beispielsweise kann es sich um Standardelemente vom Typ RAST handeln, die Kontaktelemente mit einer Breite von 2,5mm und einen Abstand zwischen den Kontaktelementen von 5mm aufweisen. So kann hier auf Standardelemente zurückgegriffen werden, wobei insbesondere durch die bevorzugte Ausführung der internen Umhäusung der Stecker innerhalb des zweiten Gehäuseteils mittels einer Kappe für die entsprechende IP-Schutzklasse Sorge getragen wird. In einer anderen Alternative kann es hier auch vorgesehen sein, dass Stecker und Steckerelement nach einem Zusammenstecken nicht manuell wieder lösbar sind, sondern hierfür ein Werkzeug benötigt wird.

Ausführungsbeispiele der Erfindung sind in den nachfolgenden Figuren dargestellt. Es zeigen:
- Figur 1: den Stator eines Elektromotors mit statorendseitig angeordnetem Kontaktelement
- Figur 2: das Gehäuse eines Elektromotors umfassend erstes und zweites Gehäuseteil
- Figur 3: den zweiteiligen Aufbau des ersten Gehäuseteils
- Figur 4: das zweite Gehäuseteil gemäß einer ersten Ausführung
- Figur 5: das zweite Gehäuseteil gemäß einer zweiten Ausführung
- Figur 6: das zweite Gehäuseteil in Unteransicht mit einer eingesetzten Kappe zur Aufnahme wenigstens eines Steckers
- Figur 7: Detailansichten der Kappe zur Aufnahme wenigstens eines Steckers
- Figur 8: Ausführungen mit einem Schiebermechanismus zur Verbindung der beiden Gehäuseteile

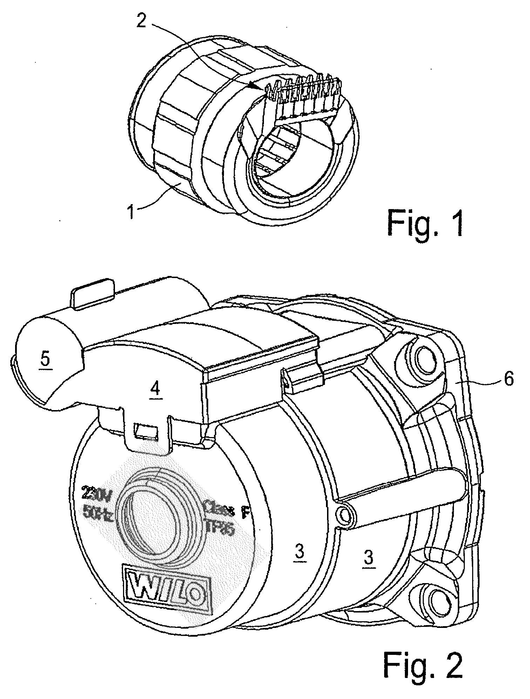

Die Figur 1 zeigt einen im Wesentlichen in bekannter Weise ausgeführten Stator 1 eines hier ansonsten nicht weiter dargestellten Elektromotors, wobei der Stator 1 eine im Wesentlichen zylindrische innere Ausnehmung aufweist, in der ein hier nicht dargestellter Rotor rotieren kann. Die elektrische Kontaktierung der Windungen des hier dargestellten Stators 1 kann über ein Steckerelement 2 erfolgen, welches im Wesentlichen statorendseitig, d.h. hier mit Bezug auf eine zu realisierende Kreiselpumpe der Pumpenseite abgewandten Seite des Stators angeordnet ist, wobei weiterhin das Steckerelement 2 in dieser Ausführung in radialer Richtung und nach oben am Stator 1 angeordnet ist. Hierbei kann sich das Steckerelement 2 in radialer Richtung derart weit vorspringend vom Stator 1 erheben, dass es über den äußeren Durchmesser des Stators 1 in radialer Richtung hinausragt.

Derartige Aufbauten sind wie eingangs genannt im Stand der Technik bekannt und werden üblicherweise nicht weiter eingehäust, wenn es sich beispielsweise um Motoren der sogenannten weißen Ware, wie z.B. bei Waschmaschinen handelt.

Die Figur 2 zeigt die Gehäuseanteile eines erfindungsgemäßen Elektromotors, ohne den Motor selbst darzustellen, umfassend einen ersten Gehäuseteil 3 und einen daran rastend befestigten zweiten Gehäuseteil 4. Dieser Gehäuseteil 4 trägt dabei weiterhin einen Kondensator 5 und umfasst in seinem Inneren wenigstens einen Stecker zur Kontaktierung des in der Figur 1 dargestellten Steckerelementes 2.

Erkennbar ist hier, dass das erste Gehäuseteil 3 im Wesentlichen topfförmig mit zylindrischer Außenwandung ausgebildet ist, wobei an der einen Stirnseite im Wesentlichen der Boden des topfförmigen Zylinders angeordnet ist und Aufschriften, wie z.B. Typenbezeichnungen trägt. An der anderen Stirnseite ist ein Flanschbereich 6 vorgesehen, zur Befestigung z.B. an anderen Gehäuseteilen, wie beispielsweise einem Pumpengehäuse, welches ein Laufrad aufnimmt, das durch den hier nicht weiter dargestellten Motor, d.h. das Innere des Gehäuses, angetrieben werden kann.

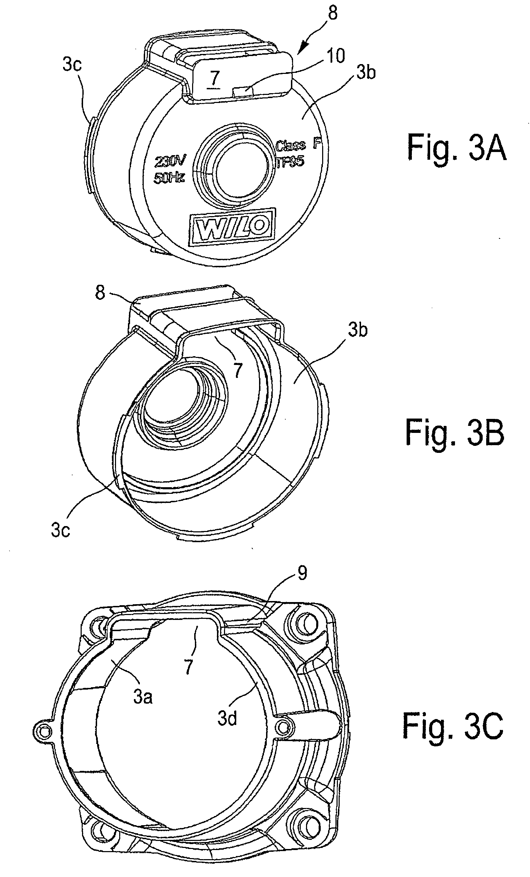

Die Figuren 3A, B und C zeigen in verschiedenen Ansichten den Aufbau des ersten Gehäuseteils 3, wie er in seiner Gesamtheit in der Figur 2 dargestellt ist. Es ist hier insbesondere mit Bezug auf die Figur 3C erkennbar, dass dieser erste Gehäuseteil 3 einen rohrförmigen Teil 3a und einen topfförmigen Teil 3b umfasst.

Hierbei kann der im Wesentlichen rohrförmige Teil 3a aus einem Metall, beispielsweise aus Aluminium, ausgefertigt sein, um eine verbesserte Wärmeabfuhr zur Umgebung hin zu gewährleisten.

Der topfförmige Teil 3b beispielsweise kann aus Kunststoff oder einem Kunststoffkomposit hergestellt sein und somit zu einer leichtbauenden und einfach herzustellenden Konstruktion beitragen. Auch können ein oder beiden Teile Ausnehmungen, Bohrungen, Schlitze oder sonstige Durchbrüche für eine verbesserte Kühlung aufweisen, was hier jedoch nicht dargestellt ist.

Beide Teile 3a, 3b des ersten Gehäuseteils 3 können durch eine Schnappverbindung oder auch auf sonstige Art und Weise aneinander befestigt werden. In dieser Ausführung kann es dafür vorgesehen sein, an dem topfförmigen Teil Rastvorsprünge 3c vorzusehen, die an mehreren Stellen in radialer Richtung vorspringend am oberen Rand des topfförmigen Teils 3b angeordnet sind und hinter eine radial nach innen stehende Kante 3d des rohrförmigen Teils 3a greifen. Beide Einzelteile 3a und 3b und somit der erste Gehäuseteil 3 insgesamt sind derart ausgebildet, dass eine Ausbuchtung des Zylindermantels 7 vorgesehen ist, die partiell den Durchmesser des zylinderförmigen Gehäuseteils 3 in radialer Richtung vergrößert, so dass dieser Gehäuseteil 3 axial über einen Stator 1 geschoben werden kann, wobei Gehäuseteil und Stator mit dem Steckerelement 2 derart zueinander ausgerichtet sind, dass das radial über den Durchmesser des Stators 1 hinausragende Steckerelement 2 innerhalb der Gehäuseausnehmung 7 zu liegen kommt.

Um ein vollständiges Überstecken in axialer Richtung zu ermöglichen, ist es hierbei vorgesehen, dass die Ausbuchtung 7 sich in axialer Richtung über die gesamte Länge des ersten Gehäuseteils erstreckt und eine Öffnung 8 in radialer Richtung aufweist, die dem Steckerelement 2 gegenüberliegt, so dass eine Kontaktierung dieses Steckerelementes 2 durch die Öffnung 8 möglich ist. Hierfür ist die Öffnung 8 im Bereich des Bodens des topfförmigen Teils 3b angeordnet.

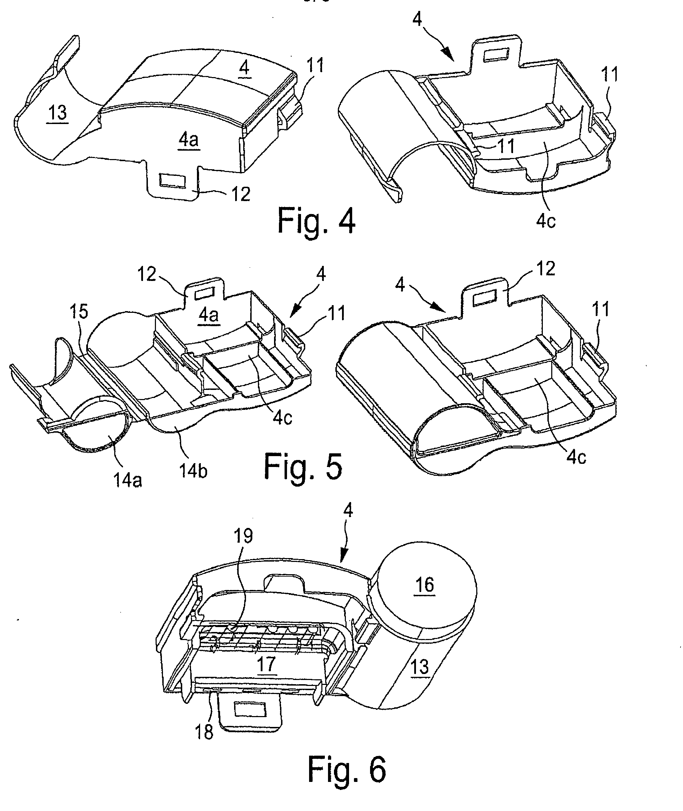

Die Figur 3c zeigt hier weiterhin, dass der rohrförmige Teil des ersten Gehäuseteils 3 auf den beiden Seitenbereichen der Ausbuchtung 7 im äußeren Bereich zwei sich in axialer Richtung erstreckende Rastnasen 9 aufweist, die dazu dienen, dass entsprechende Rastvorsprünge an einem zweiten Gehäuseteil diese Nasen 9 umgreifen können und so den zweiten Gehäuseteil, der in den Figuren 4, 5 und 6 dargestellt ist, am ersten Gehäuseteil 3 zu befestigen.

Eine weitere Rastnase 10 ist hier etwa stirnseitig in einem radialen Abstand zur Motorachse außen am Bodenbereich des topfförmigen Teils 3b des ersten Gehäuseteils angeordnet und kann von der Ausnehmung einer Lasche, die am zweiten Gehäuseteil angeordnet ist, übergriffen werden, um eine weitere Befestigung eines zweiten Gehäuseteils am ersten Gehäuseteils zu realisieren.

Die Figuren 4, 5 und 6 zeigen in detaillierterer Darstellung zwei verschiedene Ausführungsformen des zweiten Gehäuseteils 4, welches in der Figur 2 bereits im montierten Zustand dargestellt ist.

Die Figur 4 zeigt hier in zwei verschiedenen Ansichten von oben und von unten eine erste Ausführungsform des zweiten Gehäuseteils, welches in seinen seitlichen Bereichen Rastvorsprünge 11 aufweist, die mit den Rastnasen 9 des ersten Gehäuseteils korrespondieren. Dieses zweite Gehäuseteil 4 ist somit geeignet, durch die Rastverbindung auf dem ersten Gehäuseteil und hier insbesondere auf der Ausbuchtung 7 mit im Wesentlichen rechteckigen Querschnitt aufgesetzt zu werden.

Auf der (vorderen) Seitenwand 4a des zweiten Gehäuseteils 4 ist weiterhin eine Lasche 12 vorgesehen, die eine Ausnehmung aufweist, welche die vorgenannte Rastnase 10 am topfförmigen Teil des ersten Gehäuseteils übergreifen kann.

Das Innere des Gehäuseteils 4 ist dafür vorgesehen, einen Stecker aufzunehmen, der in der Figur 4 nicht dargestellt ist und der dafür vorgesehen ist, durch die vorgenannte Ausnehmung 8 im ersten Gehäuseteil das Steckerelement 2 zu kontaktieren.

Seitlich am Gehäuseteil 4 ist in dieser Ausführung eine etwa teilkreisförmig gebogene Lasche 13 vorgesehen, die in ihrer Biegung an die äußere Kontur eines hier beispielsweise zylinderförmig ausgeführten Kondensators angepasst ist, der in der Figur 4 nicht dargestellt ist. Ein solcher Kondensator wird demnach von der Lasche 13 klemmend umgriffen und in der Lage relativ zum Gehäuseteil 4 gehalten. Es kann sodann eine im Wesentlichen freie Verkabelung in das Innere des Gehäuseteils 4 erfolgen.

Die Figur 5 zeigt gegenüber der Figur 4 eine im Wesentlichen gleiche Ausführung des Gehäuseteils 4, wobei hier jedoch seitlich angrenzend an das Gehäuseteil 4 ein zweiteiliges Gehäuse 14, umfassend die Teile 14a und 14b, ggfs. einstückig angesetzt ist, welches zur Aufnahme und zum vollständigen Umschließen eines darin angeordneten und hier nicht dargestellten Kondensators dient. So ist jedes der beiden Gehäuseteile 14a und 14b im Wesentlichen halbschalenförmig ausgebildet, so dass ein Kondensator von im Wesentlichen Zylinderform in eine der Schalen eingelegt werden kann und wobei weiterhin die andere Schale über den Kondensator gelegt werden kann, um das Gehäuseteil 14 zu schließen und somit den Kondensator vor unbeabsichtigtem Kontakt oder auch vor Feuchtigkeit zu schützen. Hier ist es in dieser Ausführung vorgesehen, die beiden separaten Gehäuseteile 14a und 14b des Kondensatorgehäuses durch ein Festkörpergelenk 15 gelenkig zu verbinden, wobei dieses als in der Knicklinie verdünnter Kunststoffsteg ausgebildet sein kann.

In dieser Ausführung kann es beispielsweise vorgesehen sein, dass in der am weitesten links außen liegenden Gehäuseschale ein Kondensator klemmend befestigbar ist, wobei der klemmend befestigte Kondensator zusammen mit der Gehäuseschale 14a auf die Schale 14b geklappt wird und somit die gesamte Gehäuseanordnung 14 geschlossen wird. Diesen geschlossenen Zustand zeigt die rechtsseitige Darstellung der Figur 5.

Die Figur 6 zeigt mit Bezug auf die erste Ausführung der Figur 4 ein dementsprechendes zweites Gehäuseelement 4 mit eingelegtem Kondensator 16, der in der Lasche 13 klemmend befestigt ist. Es ist hier weiterhin erkennbar, dass mit Bezug auf diese Darstellung von unten in das Innere des Gehäuseteils 4 eine Kappe 17 eingesetzt ist, in welcher wenigstens ein hier nicht dargestellter Stecker fest einliegt, wobei durch die hier in der Darstellung nach unten weisenden Öffnungen 18 eine Kontaktierung des einliegenden Steckers mit dem Steckerelement 2 am Stator möglich ist.

Der hier in dieser Darstellung nicht erkennbare Stecker ist somit im oberen Bereich durch das zweite Gehäuseteil 4 umgeben und im unteren Bereich durch die Kappe 17, so dass der Stecker vollständig umschlossen ist und insofern sowohl gegen unbeabsichtigtes Kontaktieren als auch gegen Feuchtigkeit geschützt ist. Die hier schematisch dargestellten Kabel 19 zur elektrischen Kontaktierung des oder der Stecker sind durch einen Schlitz geführt, der sich zwischen der Kappe 17 und dem Gehäuse 4 ergibt und dazu beiträgt, dass weiterhin die Möglichkeit des Feuchtigkeitseintrittes wirksam verhindert wird.

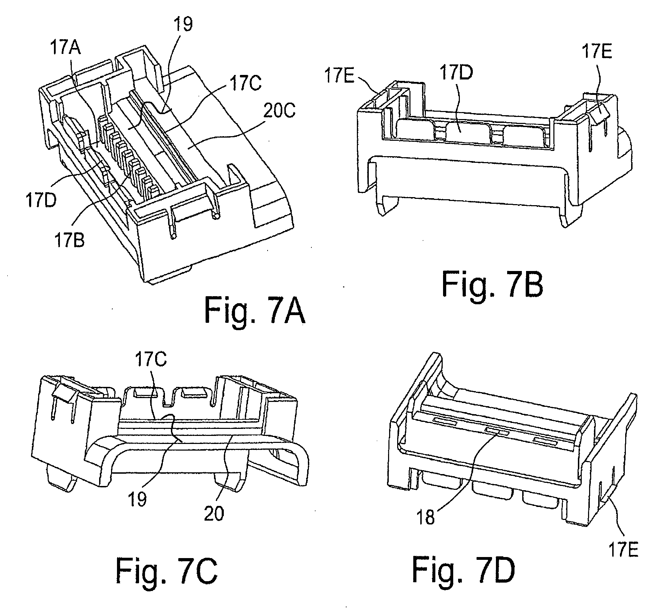

Die Figuren 7 zeigen in detaillierterer Darstellung die Kappe 17, die zur Aufnahme eines hier nicht dargestellten Steckers dient. Erkennbar ist hier in der Figur 7a, dass mit Bezug auf diese Darstellung ein oder mehrere Stecker von oben in den freien Bereich 17a eingelegt werden kann, wobei die einzelnen Kabel des hier nicht dargestellten Steckers zwischen den hier gezeigten Stegen 17b über eine Wand 17c geführt werden können, die sich ausgehend von der Kappe 17 in der Figur 7A nach oben und somit in Richtung des Inneren des zweiten Gehäuseteils 4 erstreckt.

Die obere Stirnseite des Wandbereichs 17C liegt dabei einer Stirnseite eines Wandbereichs 4c gegenüber, wobei die Wand 4c sich von dem Inneren des zweiten Gehäuseteils 4 in Richtung auf die Kappe 17 erstreckt. So wird zwischen den jeweiligen Stirnseiten einerseits der Wand 4c und andererseits der Wand 17c nach dem Zusammenfügen bzw. Einsetzen der Kappe 17 in das Gehäuseteil 4 ein Schlitz gebildet, durch den die einzelnen Leitungen zur Kontaktierung des hier nicht dargestellten Steckers geführt werden. Dieser Schlitz kann ergänzend eine die Kabel umschließende Kontur aufweisen.

Hierbei kann die Kappe 17 an ihrem vorderen Ende in Richtung der oder des einzusetzenden Steckers weisende Rastnasen 17d aufweisen, die dazu dienen können, den Stecker nach Einsetzen in der Kappe in seiner Lage zu fixieren und ein Zurückweichen gegen den Einsetzdruck bei der Kontaktierung mit dem Steckerelement 2 zu verhindern.

Um weiterhin einen Wassereintritt zu vermeiden, kann es hier vorgesehen sein, dass eine Kabelführung vom Stecker über die Wand 17c der Kappe gebogen, insbesondere S-förmig erfolgt, etwa in der Form, wie es in der Figur 7A und 7C durch das stilisierte Kabel 19 dargestellt ist. So wird das Kabel 19 vom Stecker aus dem Bereich 17A kommend zunächst nach oben über die Wandung 17c, über deren Stirnseite und anschließend wieder nach unten geführt. Auch so kann ein Eintritt von Feuchtigkeit entgegen der Schwerkraft aufgrund der Kabelbiegung verhindert werden.

Um diese Kabelführung zu realisieren, kann es weiterhin vorgesehen sein, dass in Richtung vom Stecker kommend und über den Wandbereich 17 geführt, das Kabel 19 auf einen Flächenbereich 20 der Kappe geführt wird. Gegebenenfalls kann es vorgesehen sein, im Gehäuseteil 4 Andruckmittel vorzusehen, die das Kabel gegen diesen Flächenbereich 20 andrücken.

Die Kappe 17 ihrerseits kann Rastnasen 17e aufweisen, die seitlich der Kappe angeordnet sind und im Wesentlichen senkrecht zu den Rastnasen 17d zur Befestigung der Stecker, wobei diese Rastnasen 17e dazu dienen können, eine verrastende Befestigung der Kappe 17 im inneren Bereich des zweiten Gehäuseteils 4 zu ermöglichen. So kann bei einem Zusammenbau zunächst der wenigstens eine hier nicht dargestellte Stecker innerhalb der Kappe 17 befestigt und die Kabel dieses Steckers über den Wandbereich 17c geführt werden.

Hierbei rastet bei der Befestigung des Steckers in der Kappe 17 dieser hinter die Rastnasen 17d und ist in seiner Lage fixiert. Die so zusammengesetzte Anordnung aus Stecker und Kappe 17 kann dann in das Gehäuseteil 4 eingerastet werden, so dass die Kabel 19 zwischen dem gebildeten Schlitz der beiden Wandbereiche 4c und 17c zu liegen kommen und somit der Stecker vollständig zwischen der Kappe und dem Gehäuseteil 4 eingeschlossen ist. Eine Zugänglichkeit des Steckers ist danach nur noch über die Kontaktausnehmungen 18 in der Kappe bzw. im Boden des Bereichs 17A sowie über den Schlitz zwischen den beiden Wandbereichen gegeben, so dass ein ausreichender Kontakt sowie auch ein Feuchtigkeitsschutz gegeben ist.

Als besonders vorteilhaft wird es hier empfunden, dass die Kappe 17 derart angepasst sein kann, dass der Aufnahmebereich 17a zur Aufnahme von Steckern sowie die dafür vorgesehenen Rastnasen 17d derart in der Form aneinander angepasst sind, dass Standardstecker, beispielsweise vom Typ RAST, mit Kontaktelementen der Breite 2,5mm und einem Kontaktabstand von 5mm in dieser Kappe aufgenommen und fixiert werden können. So können Standardelemente in einem erfindungsgemäßen Motor zum Einsatz kommen, die üblicherweise nicht geeignet sind, die geforderte IP-Schutzklasse zu erfüllen, wobei dies im vorliegenden Fall jedoch erreicht wird durch die erfindungsgemäßen Kappen und Gehäuseteile, die diesen standardmäßigen Stecker umgeben.

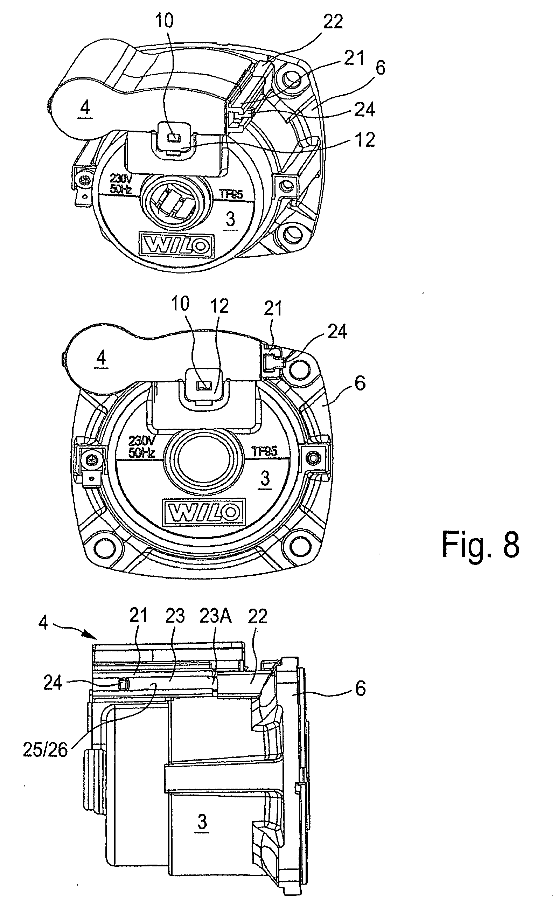

Die Figur 8 zeigt eine weitere alternative Ausführungsform mit einem zweiten Gehäuseteil 4, welches - bezogen auf diese Ansichten - auf der rechten Seitenwandung einen Schiebermechanismus aufweist zur Verriegelung und Befestigung des zweiten Gehäuseteils 4 am ersten Gehäuseteil 3. Dieser Schiebermechanismus umfasst ein Schienenelement 21, welches sich in axialer Richtung (bezogen auf die Motorachse) erstreckt und hier in der Form einer hinterschnittenen Nut ausgebildet ist.

In diesem Schienenelement 21 gleitet ein Schieberelement 23 welches mit seiner Spitze 23A in der verriegelten und somit auf den Flansch 6 zubewegten Position in Eingriff kommt mit einer Aufnahme 22, die am ersten Gehäuseteil 3 angeordnet ist.

Zum Verschieben ist am Schieberelement ein auf dem Schienenelement 21 herausragendes Griffelement 24 vorgesehen, welches manuell ergriffen und so das Schieberelement 23 bewegt werden kann.

In der untersten der Figuren 8 ist erkennbar, dass an dem Schienenelement 21 ein Vorsprung 25 vorgesehen ist, der in eine korrespondierende Ausnehmung 26 am Schieberelement 23 einrasten kann. Dadurch wird das Schieberelement 23 in der Verriegelungsstellung verrastet und kann nur noch mit einem Werkzeug zurückbewegt werden, da die Haltekraft dieser Verrastung nicht manuell überwunden werden kann.

Der übrige Aufbau entspricht hier den Figuren 5 und 3 mit einer Kappe im Gehäuseteil 4, die in den Figuren 7 beschrieben ist.

## Patentansprüche

1. Elektromotor umfassend einen Stator, darin laufenden Rotor und ein statorendseitig am Stator befestigtes Steckerelement mit im Wesentlichen radial nach außen abstehenden elektrischen Kontakten zur Aufnahme wenigstens eines in radialer Richtung aufsteckbaren Steckers, wobei der Elektromotor ein erstes Gehäuseteil (3) umfasst, welches im Wesentlichen als zylinderförmiger Topf ausgebildet ist und den Stator umgibt, und ein zweites Gehäuseteil (4) umfasst, welches am ersten Gehäuseteil (3) befestigbar ist, wobei das erste Gehäuseteil (3) eine in radialer Richtung von der zylindrischen Mantelfläche vorspringende und sich in axialer Richtung, über im Wesentlichen die gesamte axiale Länge erstreckende Ausbuchtung (7) aufweist, in der eine in radialer Richtung offene Ausnehmung (8) vorgesehen ist, durch die das Steckerelement nach der Montage des ersten Gehäuseteils kontaktierbar ist, **dadurch gekennzeichnet, dass** im zweiten Gehäuseteil wenigstens ein Stecker durch eine Rastverbindung lagestabil fixiert ist und wobei beim rastenden Befestigen des zweiten Gehäuseteils (4) am ersten Gehäuseteil (3) der wenigstens eine Stecker das Steckerelement (2) lösbar kontaktiert und das zweite Gehäuseteil die radial offene Ausnehmung (8) nach der elektrischen Kontaktierung überdeckt, wobei für das rastende Befestigen
a. beidseitig der Ausbuchtung (7) sich zumindest über einen Teilbereich des ersten Gehäuseteils in axialer Richtung erstreckende Rastnasen (9) vorgesehen sind und/oder
b. an der Ausbuchtung (7) an der Stirnseite des Motors wenigstens eine Rastnase (10) oder eine Rastausnehmung vorgesehen ist und/oder
c. an einem vorspringenden Gehäusewandbereich des zweiten Gehäuseteils, der einen Wandbereich des ersten Gehäuseteils bei der Montage überdeckt oder an der Topfbodenseite des zylindrischen ersten Gehäuseteils Noppen oder wenigstens ein Vorsprung angeordnet sind, die in wenigstens eine korrespondierende Ausnehmung bei der Montage eingreifen und/oder
d. an einem der Gehäuseteile ein Schieberelement und am anderen eine Aufnahme für das Schieberelement vorgesehen ist, wobei das Schieberelement in einem Schienenelement vor- und zurückgleiten kann, in welchem ein Vorsprung als Rastelement vorgesehen ist, auf welches das Schieberelement beim Befestigen mit einer darin vorgesehenen Ausnehmung aufschiebbar und verrastbar ist.

2. Elektromotor nach Anspruch 1, **dadurch gekennzeichnet, dass** der innere durch die Ausbuchtung bereitgestellte Platz sich über die gesamte Länge des zylindrischen Gehäuseteils erstreckt und außen die radial vorstehende Ausbuchtung in einen Flanschbereich übergeht zur Befestigung an einem Pumpengehäuseteil.

3. Elektromotor nach einem der vorherigen Ansprüche, **dadurch gekennzeichnet, dass** das über den äußeren Durchmesser des Stators radial hinausragende Steckerelement beim Aufschieben des ersten Gehäuseteils über den Stator relativ zum ersten Gehäuseteil durch die Ausbuchtung hindurchführbar ist

4. Elektromotor nach einem der vorherigen Ansprüche, **dadurch gekennzeichnet, dass** sich die Rastnasen (9) zumindest über den rohrförmigen Teil (3a) des ersten Gehäuseteils (3) erstrecken.

5. Elektromotor nach einem der vorherigen Ansprüche, **dadurch gekennzeichnet, dass** das erste Gehäuseteil (3) in axialer Richtung zweigeteilt ist.

6. Elektromotor nach Anspruch 5, **dadurch gekennzeichnet, dass** das erste Gehäuseteil (3) einen rohrförmigen Teil (3a) umfasst, der einen Befestigungsflansch aufweist, der auf der dem statorseitigen Steckerelement (2) abgewandten Seite des ersten Gehäuseteil (3) angeordnet ist und ein zweites dem Steckerelement (2) zugewandtes topfförmiges Teil (3b) aufweist, welches die in radialer Richtung offene Ausnehmung (8) aufweist.

7. Elektromotor nach Anspruch 5 oder 6, **dadurch gekennzeichnet, dass** der erste dem Steckerelement abgewandte, insbesondere rohrförmige Teil (3a) metallisch und der zweite dem Steckerelement zugewandte, insbesondere topfförmige Teil (3b) nichtmetallisch, insbesondere aus einem KunststoffKomposit ausgebildet ist, insbesondere wobei beide Teile (3a, 3b) aneinander befestigt sind durch eine Schnappverbindung (3c, 3d).

8. Elektromotor nach einem der vorherigen Ansprüche, **dadurch gekennzeichnet, dass** am zweiten Gehäuseteil (4) eine, insbesondere teilkreisförmig gebogene Lasche (13) vorgesehen ist zur formschlüssigen Befestigung eines Kondensators (16).

9. Elektromotor nach einem der vorherigen Ansprüche, **dadurch gekennzeichnet, dass** am zweiten Gehäuseteil (4) ein Gehäuseelement (14a, 14b) zur Aufnahme eines Kondensators (16) angeordnet ist, welches zwei Gehäuseschalen (14a, 14b) umfasst, die gelenkig (15) miteinander verbunden sind.

10. Elektromotor nach einem der vorherigen Ansprüche, **dadurch gekennzeichnet, dass** der wenigstens eine Stecker in einer Kappe (17) befestigt ist, die in das Innere des zweiten Gehäuseteils (4) eingesetzt ist.

11. Elektromotor nach einem der vorherigen Ansprüche,, **dadurch gekennzeichnet, dass** die Anschlusskabel (19) des wenigstens einen Steckers durch einen Schlitz geführt sind, der durch das Zusammenfügen von Kappe (17) und zweiten Gehäuseteil (4) entsteht.

12. Elektromotor nach Anspruch 11, **dadurch gekennzeichnet, dass** der Schlitz gebildet ist durch einen von der Innenseite des zweiten Gehäuseteils (4) sich zur Kappe (17) und einen von der Kappe (17) sich zur Innenseite des zweiten Gehäuseteils (4) erstreckenden, insbesondere senkrecht zur axialen Richtung des Motors ausgerichteten Wandbereich (4c, 17c), wobei die jeweiligen Stirnseiten der beiden Wandbereiche (4c, 17c) zumindest bereichsweise einander mit Abstand gegenüberliegen.

13. Elektromotor nach einem der vorherigen Ansprüche, **dadurch gekennzeichnet, dass** innerhalb des wenigstens einen Steckers oder des Steckerelements (2) am Stator Brücken vorgesehen sind zur elektrischen Kontaktierung.

14. Elektromotor nach einem der vorherigen Ansprüche, **dadurch gekennzeichnet, dass** in der Kappe (17) oder dem zweiten Gehäuseteil (4) wenigstens zwei Stecker befestigbar sind, wobei einer der Stecker zur Kontaktierung des Kondensators (16) dient.

15. Elektromotor nach einem der vorherigen Ansprüche, **dadurch gekennzeichnet, dass** Stecker und Steckerelement (2) als StandardElemente vom TYP RAST ausgebildet sind, insbesondere mit Kontaktelementen mit einer Breite von 2,5 mm und einem Abstand von 5 mm.

16. Elektromotor nach einem der vorherigen Ansprüche, **dadurch gekennzeichnet, dass** Stecker und Steckerelement (2) nach einem Zusammenstecken nur mit einem Werkzeug wieder lösbar sind.

17. Elektromotor nach einem der vorherigen Ansprüche, **dadurch gekennzeichnet, dass** eine Verriegelung des zweiten Gehäuseteils (4) am ersten Gehäuseteil (3) mittels eines Schiebermechanismus (21, 22, 23,24) erfolgt, insbesondere bei dem am zweiten Gehäuseteil (4) ein Schienenelement (21) mit einem darin beweglichen und insbesondere verrastbaren Schieberelement (23) angeordnet ist.

## Claims

1. Electric motor comprising a stator, a rotor which runs therein and a plug element which is fastened to the stator at the stator end and has electrical contacts, which project substantially radially outwards, for receiving at least one plug which can be plug-connected in the radial direction, wherein the electric motor comprises a first housing part (3) which is substantially in the form of a cylindrical pot and surrounds the stator, and comprises a second housing part (4) which can be fastened to the first housing part (3), wherein the first housing part (3) has a protrusion (7) which projects from the cylindrical casing surface in the radial direction and which extends over substantially the entire axial length in the axial direction and in which a recess (8) which is open in the radial direction and through which contact can be made with the plug element after mounting of the first housing part is provided, **characterized in that**, in the second housing part, at least one plug is fixed in a positionally stable manner by a latching connection, and wherein, when the second housing part (4) is fastened in a latching manner to the first housing part (3), the at least one plug makes releasable contact with the plug element (2) and the second housing part covers the radially open recess (8) after electrical contact is made, wherein, for the purpose of fastening in a latching manner,
a. latching lugs (9) which extend at least over a subregion of the first housing part in the axial direction are provided on both sides of the protrusion (7), and/or
b. at least one latching lug (10) or one latching recess is provided on the protrusion (7) at the end face of the motor, and/or
c. nubs or at least one projection which engage into at least one corresponding recess during mounting are arranged on a projecting housing wall region of the second housing part which covers a wall region of the first housing part during mounting, or on the pot bottom face of the cylindrical first housing part, and/or
d. a slide element is provided on one of the housing parts and a receiving means for the slide element is provided on the other housing part, wherein the slide element can slide forwards and backwards in a rail element in which a projection is provided as a latching element onto which, during fastening, the slide element can be pushed and latched by way of a recess which is provided therein.

2. Electric motor according to Claim 1, **characterized in that** the inner space which is provided by the protrusion extends over the entire length of the cylindrical housing part and, on the outside, the radially projecting protrusion merges with a flange region for the purpose of fastening to a pump housing part.

3. Electric motor according to either of the preceding claims, **characterized in that** the plug element which protrudes radially over the outside diameter of the stator can be routed through the protrusion when the first housing part is pushed over the stator relative to the first housing part.

4. Electric motor according to one of the preceding claims, **characterized in that** the latching lugs (9) extend at least over the tubular part (3a) of the first housing part (3).

5. Electric motor according to one of the preceding claims, **characterized in that** the first housing part (3) is divided into two in the axial direction.

6. Electric motor according to Claim 5, **characterized in that** the first housing part (3) comprises a tubular part (3a) which has a fastening flange which is arranged on that side of the first housing part (3) which is averted from the stator-end plug element (2), and has a second pot-like part (3b) which faces the plug element (2) and has the recess (8) which is open in the radial direction.

7. Electric motor according to Claim 5 or 6, **characterized in that** the first, in particular tubular, part (3a) which is averted from the plug element is metallic, and the second, in particular pot-like, part (3b) which faces the plug element is non-metallic, in particular is formed from a plastic composite, in particular wherein both parts (3a, 3b) are fastened to one another by a snap-action connection (3c, 3d).

8. Electric motor according to one of the preceding claims, **characterized in that** a tab (13), which is bent in the form of part of a circle in particular, is provided on the second housing part (4) for fastening a condenser (16) in an interlocking manner.

9. Electric motor according to one of the preceding claims, **characterized in that** a housing element (14a, 14b) for receiving a condenser (16) is arranged on the second housing part (4), the said housing element comprising two housing shells (14a, 14b) which are connected to one another in an articulated manner (15).

10. Electric motor according to one of the preceding claims, **characterized in that** the at least one plug can be fastened/is fastened in a cap (17) which can be inserted/is inserted into the interior of the second housing part (4).

11. Electric motor according to one of the preceding claims, **characterized in that** the connection cable (19) of the at least one plug is routed through a slot which is created by joining the cap (17) and the second housing part (4).

12. Electric motor according to Claim 11, **characterized in that** the slot is formed by a wall region (4c, 17c) which extends from the inner face of the second housing part (4) to the cap (17) and a wall region (4c, 17c) which extends from the cap (17) to the inner face of the second housing part (4), in particular in a manner oriented perpendicular to the axial direction of the motor, wherein the respective end faces of the two wall regions (4c, 17c) are situated at a distance opposite one another at least in regions.

13. Electric motor according to one of the preceding claims, **characterized in that** bridges are provided on the stator within the at least one plug or the plug element (2) for the purpose of electrical contact-connection.

14. Electric motor according to one of the preceding claims, **characterized in that** at least two plugs can be fastened in the cap (17) or the second housing part (4), wherein one of the plugs serves to make contact with the condenser (16).

15. Electric motor according to one of the preceding claims, **characterized in that** the plug and the plug element (2) are RAST-type standard elements, in particular with contact elements having a width of 2.5 mm and a spacing of 5 mm.

16. Electric motor according to one of the preceding claims, **characterized in that**, after being plug-connected, the plug and the plug element (2) can be released again only using a tool.

17. Electric motor according to one of the preceding claims, **characterized in that** the second housing part (4) is locked to the first housing part (3) by means of a slide mechanism (21, 22, 23, 24), in particular in which a rail element (21) with a slide element (23) which can move and, in particular, can be latched therein is arranged on the second housing part (4).

## Revendications

1. Moteur électrique comprenant un stator, un rotor qui tourne dans ce dernier et un élément d'enfichage fixé au stator, du côté de l'extrémité du stator, comportant des contacts électriques dépassant vers l'extérieur sensiblement dans le sens radial et destinés à recevoir au moins une fiche pouvant être enfichée dans le sens radial, dans lequel le moteur électrique comprend une première partie de boîtier (3) qui est réalisée sensiblement sous la forme d'un pot cylindrique et entoure le stator, et comprend une deuxième partie de boîtier (4) qui peut être fixée à la première partie de boîtier (3), dans lequel la première partie de boîtier (3) présente une protubérance (7) qui fait saillie dans le sens radial à partir de l'enveloppe cylindrique et qui s'étend dans le sens axial sensiblement sur toute la longueur axiale, dans laquelle est ménagé un évidement (8) ouvert dans le sens radial, à travers lequel un contact peut être établi avec l'élément d'enfichage après le montage de la première partie de boîtier, **caractérisé en ce qu'**au moins une fiche est fixée en position stable dans la deuxième partie de boîtier par une liaison par encliquetage et dans lequel, lors de la fixation par encliquetage de la deuxième partie de boîtier (4) à la première partie de boîtier (3), ladite au moins une fiche entre en contact amovible avec l'élément d'enfichage (2) et la deuxième partie de boîtier recouvre l'évidement (8) ouvert radialement après la mise en contact électrique, dans lequel, pour la fixation par encliquetage,
a. il est prévu des deux côtés de la protubérance (7) des ergots d'encliquetage (9) s'étendant dans le sens axial au moins sur une région partielle de la première partie de boîtier et/ou
b. il est prévu au moins un ergot d'encliquetage (10) ou un évidement d'encliquetage sur la protubérance (7) sur la face avant du moteur et/ou
c. des plots ou au moins une saillie sont disposés sur une région de paroi de boîtier faisant saillie de la deuxième partie de boîtier, laquelle région recouvre une région de paroi de la première partie de boîtier lors du montage ou sur la face inférieure du pot de la première partie de boîtier cylindrique, lesquels plots s'encliquettent dans au moins un évidement correspondant lors du montage et/ou
d. un élément coulissant est prévu sur l'une des parties de boîtier et un réceptacle est prévu pour l'élément coulissant sur l'autre partie de boîtier, dans lequel l'élément coulissant peut être amené à coulisser vers l'avant et vers l'arrière dans un élément formant glissière dans lequel il est prévu une saillie en tant qu'élément d'encliquetage, sur laquelle l'élément coulissant peut-être amené à se déplacer et peut-être encliqueté lors de sa fixation à un évidement prévu à l'intérieur de celui-ci.

2. Moteur électrique selon la revendication 1, **caractérisé en ce que** l'espace fourni par la protubérance s'étend sur la totalité de la longueur de la partie de boîtier cylindrique et la protubérance faisant saillie radialement dépasse dans une région formant bride pour la fixation à une partie de boîtier de pompe.

3. Moteur électrique selon l'une quelconque des revendications précédentes, **caractérisé en ce que** l'élément d'enfichage qui fait saillie radialement par rapport au diamètre extérieur du stator lorsque la première partie de boîtier est repoussée sur le stator, peut être déplacé par la protubérance par rapport à la première partie de boîtier.

4. Moteur électrique selon l'une quelconque des revendications précédentes, **caractérisé en ce que** les ergots d'encliquetage (9) s'étendent au moins sur la partie tubulaire (3a) de la première partie de boîtier (3).

5. Moteur électrique selon l'une quelconque des revendications précédentes, **caractérisé en ce que** la première partie de boîtier (3) est divisée en deux parties dans le sens radial.

6. Moteur électrique selon la revendication 5, **caractérisé en ce que** la première partie de boîtier (3) comprend une partie tubulaire (3a) qui présente une bride de fixation disposée sur la face de la première partie de boîtier (3) qui est opposée à l'élément d'enfichage (2) situé du côté du stator et présente une deuxième partie en forme de pot (3b) qui est tournée vers l'élément d'enfichage (2) et qui comprend l'évidement (8) ouvert dans le sens radial.

7. Moteur électrique selon la revendication 5 ou 6, **caractérisé en ce que** la première partie (3a), notamment de forme tubulaire, qui est opposée à l'élément d'enfichage, est réalisée sous forme métallique et **en ce que** la deuxième partie (3b), notamment en forme de pot, qui est tournée vers l'élément d'enfichage, n'est pas réalisée sous forme métallique, et est notamment réalisée à partir d'un composite de matière plastique, dans lequel les deux parties (3a, 3b) sont notamment fixées l'une à l'autre par une liaison à encliquetage (3c, 3d).

8. Moteur électrique selon l'une quelconque des revendications précédentes, **caractérisé en ce qu'**il est prévu sur la deuxième partie de boîtier (4) une languette (13), notamment incurvée en forme d'arc de cercle, pour la fixation par complémentarité de forme d'un condensateur (16).

9. Moteur électrique selon l'une quelconque des revendications précédentes, **caractérisé en ce qu'**un élément de boîtier (14a, 14b) est disposé sur la deuxième partie de boîtier (4) pour recevoir un condensateur (16), lequel élément de boîtier comprend deux coques de boîtier (14a, 14b) qui sont reliées l'une à l'autre de manière articulée (15).

10. Moteur électrique selon l'une quelconque des revendications précédentes, **caractérisé en ce que** ladite au moins une fiche est fixée dans un capuchon (17) qui est inséré à l'intérieur de la deuxième partie de boîtier (4).

11. Moteur électrique selon l'une quelconque des revendications précédentes, **caractérisé en ce que** les câbles de raccordement (19) de l'au moins une fiche sont amenés à passer à travers une fente qui est formée par l'assemblage du capuchon (17) et de la deuxième partie de boîtier (4).

12. Moteur électrique selon la revendication 11, **caractérisé en ce que** la fente est formée par une région de paroi (4c, 17c) s'étendant de la face interne de la deuxième partie de boîtier (4) jusqu'au capuchon (17) et par une région de paroi s'étendant du capuchon (17) jusqu'à la face interne de la deuxième partie de boîtier (4), et notamment dirigée perpendiculairement au sens axial du moteur, dans lequel les faces avant respectives des deux régions de paroi (4c, 17c) se font au moins partiellement face avec un certain écartement.

13. Moteur électrique selon l'une quelconque des revendications précédentes, **caractérisé en ce qu'**il est prévu des ponts sur le stator à l'intérieur de l'au moins une fiche ou de l'élément d'enfichage (2) pour l'établissement d'un contact électrique.

14. Moteur électrique selon l'une quelconque des revendications précédentes, **caractérisé en ce qu'**au moins deux fiches peuvent être fixées dans le capuchon (17) ou la deuxième partie de boîtier (4), dans lequel l'une des fiches sert à l'établissement d'un contact avec le condensateur (16).

15. Moteur électrique selon l'une quelconque des revendications précédentes, **caractérisé en ce que** la fiche et l'élément d'enfichage (2) sont réalisés sous la forme d'éléments normalisés du type RAST notamment avec des éléments de contact ayant une largeur de 2,5 mm et un écartement de 5 mm.

16. Moteur électrique selon l'une quelconque des revendications précédentes, **caractérisé en ce que** la fiche et l'élément d'affichage (2) ne peuvent être de nouveau séparés l'un de l'autre qu'au moyen d'un outil après qu'ils ont été enfichés l'un dans l'autre.

17. Moteur électrique selon l'une quelconque des revendications précédentes, **caractérisé en ce qu'**un verrouillage de la deuxième partie de boîtier (4) sur la première partie de boîtier (3) est effectué au moyen d'un mécanisme coulissant (21, 22, 23, 24), dans lequel un élément formant glissière (21) comportant un élément coulissant (23) mobile dans celui-ci et pouvant notamment être enclenché, est notamment disposé sur la deuxième partie de boîtier (4).
